# EUROPÄISCHE PATENTSCHRIFT

(11) **EP 2 296 485 B1**
(45) Veröffentlichungstag und Bekanntmachung des Hinweises auf die Patenterteilung: **03.12.2014**
(21) Anmeldenummer: 09729791.5
(22) Anmeldetag: 16.02.2009
(51) Int. Cl.: A23G 3/02, A23G 3/00

(54) **DOSIER- UND MISCHMASCHINE SOWIE VERFAHREN ZUR HERSTELLUNG EINER LÖSUNG**
METERING AND MIXING MACHINE AND METHOD FOR PRODUCING A SOLUTION
MACHINE DE DOSAGE ET DE MÉLANGE ET PROCÉDÉ DE PRODUCTION D'UNE SOLUTION

(30) Priorität: 10.04.2008 DE 102008001108
(43) Veröffentlichungstag der Anmeldung: 23.03.2011
(73) Patentinhaber: Robert Bosch GmbH, 70442 Stuttgart (DE)
(72) Erfinder: HORNSCHUCH, Stephan, 41238 Moenchengladbach (DE); HEINICKE, Olaf, 40882 Ratingen (DE); UPMANN, Hendrik, 48565 Steinfurt (DE)
(86) Internationale Anmeldenummer: PCT/EP2009/051754
(87) Internationale Veröffentlichungsnummer: WO 2009/124799

(56) Entgegenhaltungen:
- EP-A- 0 418 106
- WO-A-92/00016
- DE-A1- 2 450 525
- DE-A1- 19 951 462
- GB-A- 899 039

## Beschreibung

### Stand der Technik

Die vorliegende Erfindung betrifft eine kontinuierlich arbeitende Dosier- und Mischmaschine zur Herstellung einer Ausgangslösung für Süßigkeiten sowie ein Verfahren zur Herstellung einer derartigen Ausgangslösung.

Bei der Herstellung von Bonbons wird üblicherweise eine Mischung aus etwa gleichen Teilen Zucker und Glucosesirup in Wasser vollständig aufgelöst. Dann wird aus dieser Lösung der Hauptanteil des Wassers wieder herausgekocht. Das Auskochen von Wasser ist sehr energieintensiv und somit ein relevanter Kostenfaktor bei der Bonbonherstellung. Die Herstellung der Lösung, welche als Ausgangsstoff für die Süßwaren dient, wird bisher diskontinuierlich ausgeführt. Dabei werden die Zutaten nacheinander unter Zusatz von Wasser in einem Wiegebehälter dosiert und zu einer Lösung (slurry) vermischt. Nach dem Mischvorgang wird die Ausgangslösung in einen Vorratsbehälter abgelassen und von dort zu einer meist kontinuierlichen Weiterverarbeitung bereitgestellt. Vorteil dieses Verfahrens ist es, dass eine hohe Genauigkeit der zugegebenen Menge der Zutaten erreicht werden kann. Ferner kann auch eine hohe Reproduzierbarkeit erreicht werden, so dass ein hohes Qualitätsniveau der hergestellten Süßwaren erreicht werden kann. Nachteilig ist jedoch der diskontinuierliche Herstellungsprozess, welcher insbesondere bei der Massenherstellung von Süßigkeiten nicht optimal ist.

Aus der DE-A-19951462 sind bereits eine Vorrichtung und ein Verfahren zur Herstellung von Bonbon-Massen bekannt. Aus einer Dosiereinrichtung werden zuckerhaltige Trockenkomponenten sowie Flüssigkomponenten einem Mischgerät zugeführt. Bei dem Mischgerät handelt es sich um einen Hochschermischer, in dem die Komponenten durch einen Rotor intensiv gerührt werden, sodass sie sich aufgrund der dabei entstehenden Reibungswärme verflüssigen. Hierbei ist nur ein sehr geringer Wassergehalt notwendig und die bisher übliche Auflösung der zuckerhaltigen Trockenkomponenten in Wasser mit anschließendem Wasserentzug entfällt.

### Vorteile der Erfindung

Die erfindungsgemäße Dosier- und Mischmaschine gemäß den Merkmalen des Patentanspruchs 1 weist demgegenüber den Vorteil auf, dass ihre Nutzung einen signifikant reduzierten Energiebedarf ermöglicht und eine hohe Flexibilität bei der Produktion von Süßwaren gewährleistet. Weiter muss erfindungsgemäß kein großer Vorratsbehälter für eine Zwischenspeicherung der Ausgangslösung (Slurry) vorgesehen werden. Der erfindungsgemäße Verzicht auf den Zwischenbehälter kann ferner verhindern, dass eine Entmischung und Sedimentation von Bestandteilen der Ausgangslösung im Zwischenbehälter auftritt. Dies wird erfindungsgemäß dadurch erreicht, dass die kontinuierlich arbeitende Dosier- und Mischmaschine einen Zufuhrpfad zum Zuführen eines ersten flüssigen Bestandteils und einen zweiten Zufuhrpfad zum Zuführen eines zweiten, pulverförmigen Bestandteils aufweist. Ferner umfasst die Maschine ein Mischaggregat, in welches der erste und der zweite Zufuhrpfad einmünden. Im ersten Zufuhrpfad ist eine erste Mengenerfassung angeordnet, um eine Menge des kontinuierlich zugeführten ersten Bestandteils zu erfassen. Ferner ist im zweiten Zufuhrpfad eine zweite Mengenerfassungseinrichtung angeordnet, um eine Menge des zweiten kontinuierlich zugeführten Bestandteils zu erfassen. Weiterhin ist im ersten und zweiten Zufuhrpfad jeweils eine Fördereinrichtung vorgesehen, um eine kontinuierliche Förderung des ersten bzw. zweiten Bestandteils auszuführen. Hierdurch kann eine kontinuierlich arbeitende Dosier- und Mischmaschine bereitgestellt werden, welche zur Herstellung einer insbesondere kristallhaltigen Ausgangslösung für Süßigkeiten, insbesondere für Bonbons, ermöglicht. Es sei angemerkt, dass unter dem Begriff "pulverförmig" ein schüttfähiger Bestandteil unabhängig von seiner Korngröße verstanden wird. Weiter umfasst die erfindungsgemäße Dosier- und Mischmaschine einen Wärmetauscher, welcher in dem ersten Zufuhrpfad angeordnet ist. Hierdurch kann eine Vorerwärmung des ersten flüssigen Bestandteils, welcher über den ersten Zufuhrpfad zugeführt wird, ermöglicht werden.

Die Unteransprüche zeigen bevorzugte Weiterbildungen der Erfindung.

Vorzugsweise umfasst die Dosier- und Mischmaschine gemäß der Erfindung einen dritten Zufuhrpfad , um kontinuierlich eine vorbestimmte Menge einer weiteren Flüssigkeit zuzuführen, wobei der dritte Zufuhrpfad in den ersten Zufuhrpfad mündet, oder wobei der dritte Zufuhrpfad direkt in das Mischaggregat mündet. Die weitere Flüssigkeit kann beispielsweise Wasser oder auch eine weitere flüssige Zutat für die Ausgangslösung, beispielsweise Milch, Sahne, Honig, flüssige Geschmacksstoffe, flüssiges Fett o.Ä. sein.

Weiter bevorzugt umfasst die erfindungsgemäße Dosier- und Mischmaschine einen Spülanschluss, welcher beim ersten Zufuhrpfad angeordnet ist. Über den Spülanschluss kann eine Reinigungsflüssigkeit zum Reinigen des ersten Zufuhrpfads sowie des Mischaggregats zugeführt werden.

Gemäß einer weiteren bevorzugten Ausgestaltung der vorliegenden Erfindung ist die zweite Fördereinrichtung im zweiten Zufuhrpfad zur Förderung des zweiten, pulverformigen Bestandteils ein Schneckenförderer oder ein Vibrationsförderer. Der Schneckenförderer kann auf einfache Weise eine kontinuierliche Förderung sicherstellen, so dass der zweite Bestandteil kontinuierlich zum Mischaggregat gefördert werden kann.

Gemäß einer weiteren bevorzugten Ausgestaltung der vorliegenden Erfindung ist die zweite Mengenerfassungseinrichtung eine Waage. Die Waage ist dabei vorzugsweise an dem Schneckenförderer angeordnet. Hierdurch kann die Waage kontinuierlich eine Überprüfung der zugeführten Menge des zweiten Bestandteils ausführen.

Weiter bevorzugt umfasst die erfindungsgemäße Dosier- und Mischmaschine einen vierten Zufuhrpfad, um einen weiteren pulverförmigen Bestandteil kontinuierlich zu fördern. Der vierte Zufuhrpfad mündet dabei entweder in den zweiten Zufuhrpfad in Förderrichtung nach der zweiten Fördereinrichtung, oder mündet direkt in das Mischaggregat. Durch den vierten Zufuhrpfad ist es dabei möglich, einen weiteren pulverförmigen Bestandteil zur Ausgangslösung zuzugeben.

Weiter bevorzugt umfasst die erfindungsgemäße Dosier- und Mischmaschine ein Löseaggregat, z.B. einen Wärmetauscher mit Gegendruckventil, um nach dem Mischaggregat die Kristalle der Ausgangslösung vollständig zu lösen.

Es sei angemerkt, dass in den Zufuhrpfaden der erfindungsgemäße Dosier- und Mischmaschine selbstverständlich eine Vielzahl von Sperrventilen vorgesehen sein kann, welche von einer zentralen Steuereinheit angesteuert werden. Weiter bevorzugt kann die Maschine auch eine Drainageeinrichtung umfassen, um fallweise eine Entleerung der Zufuhrpfade und/oder des Mischaggregats zu ermöglichen.

Weiterhin betrifft die vorliegende Erfindung ein Verfahren zur Herstellung einer Ausgangslösung für Süßigkeiten mit den Schritten des kontinuierlichen Zuführens eines ersten flüssigen Bestandteils der Ausgangslösung zu einem Mischaggregat über einen ersten Zufuhrpfad Erwärmen des flüssigen Bestandteils über einen im ersten Zufuhrpfad angeordneten Wärmetauscher, des kontinuierlichen Zuführens eines zweiten pulverformigenBestandteils der Ausgangslösung zu dem Mischaggregat über einen zweiten Zufuhrpfad und des Mischens der kontinuierlich zugeführten ersten und zweiten Bestandteile im Mischaggregat, um die Ausgangslösung bereitzustellen. Während des Vorgangs des kontinuierlichen Zuführens des ersten und zweiten Bestandteils wird sowohl der erste als auch der zweite Bestandteil ständig erfasst, so dass eine genaue Überwachung der zugeführten Menge der ersten und zweiten Bestandteile für die Ausgangslösung der Süßigkeiten möglich ist. Gemäß des erfindungsgemäßen Verfahrens kann somit eine Vermischung eines flüssigen und pulverförmigen Bestandteils mit hohen Feststoffanteilen erhalten werden. Der pulverförmige Bestandteil ist vorzugsweise kristalliner Zucker und der flüssige Bestandteil ist vorzugsweise ein Glucosesirup mit hoher Viskosität. Der Wasseranteil des Glucosesirups beträgt dabei vorzugsweise unter 20%, weiter bevorzugt unter 15 % und besonders bevorzugt unter 10%. Erfindungsgemäß kann somit durch das kontinuierliche getrennte Zuführen der beiden Bestandteile das Mischen einer Ausgangslösung ausgeführt werden, welche nur einen geringen Wasseranteil enthält. Dadurch kann insbesondere im nachgeschalteten Schritt des Auskochens des Wassers aus der Ausgangslösung ein Energiebedarf deutlich reduziert werden, da weniger Wasser aus der Lösung ausgekocht werden muss. Dabei kann das erfindungsgemäße Verfahren insbesondere eine Mischung mit einem Feststoffanteil bis über 90 % ermöglichen. Hierbei ermöglicht das erfindungsgemäße Verfahren des kontinuierlichen Zuführens der Bestandteile trotzdem ein gutes Vermischen, auch wenn hohe Feststoffanteile vorhanden sind. Weiterhin kann das erfindungsgemäße Verfahren auf große Puffervolumen oder Ähnliches verzichten, da es kontinuierlich arbeitet.

Vorzugsweise wird eine vorbestimmte Menge von Wasser und/oder ein weiterer flüssiger Bestandteil für die Ausgangslösung in den ersten Zufuhrpfad und/oder direkt in das Mischaggregat kontinuierlich zugeführt. Dadurch können auch Ausgangslösungen mit mehreren verschiedenen Bestandteilen einfach und sicher bereitgestellt werden und der Wasseranteil der Mischung beliebig vorzugsweise zwischen 10 % und 20 % eingestellt werden. Weiter bevorzugt kann selbstverständlich auch noch ein weiterer pulverförmiger Bestandteil in den zweiten Zufuhrpfad und/oder direkt in das Mischaggregat zugeführt werden.

Es sei angemerkt, dass zur Herstellung von Bonbons als flüssiger Bestandteil vorzugsweise ein Glucosesirup und als pulverförmiger Bestandteil vorzugsweise kristalliner Zucker verwendet wird. Als Ausgangslösung kann dann eine kristalline Lösung erhalten werden, welche dann einem Löseaggregat und einem Kocher zum vollständigen Lösen und anschließendem Auskochen des Wassers in der Ausgangslösung zugeführt werden kann.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Prinzipdarstellung einer kontinuierlich arbeitenden Dosier- und Mischmaschine gemäß einem ersten Ausführungsbeispiel der Erfindung,
- Figur 2: eine schematische Prinzipdarstellung einer kontinuierlich arbeitenden Dosier- und Mischmaschine gemäß einem zweiten Ausführungsbeispiel der Erfindung, und
- Figur 3: eine schematische Prinzipdarstellung einer kontinuierlich arbeitenden Dosier- und Mischmaschine gemäß einem dritten Ausführungsbeispiel der Erfindung.

### Bevorzugte Ausführungsformen der Erfindung

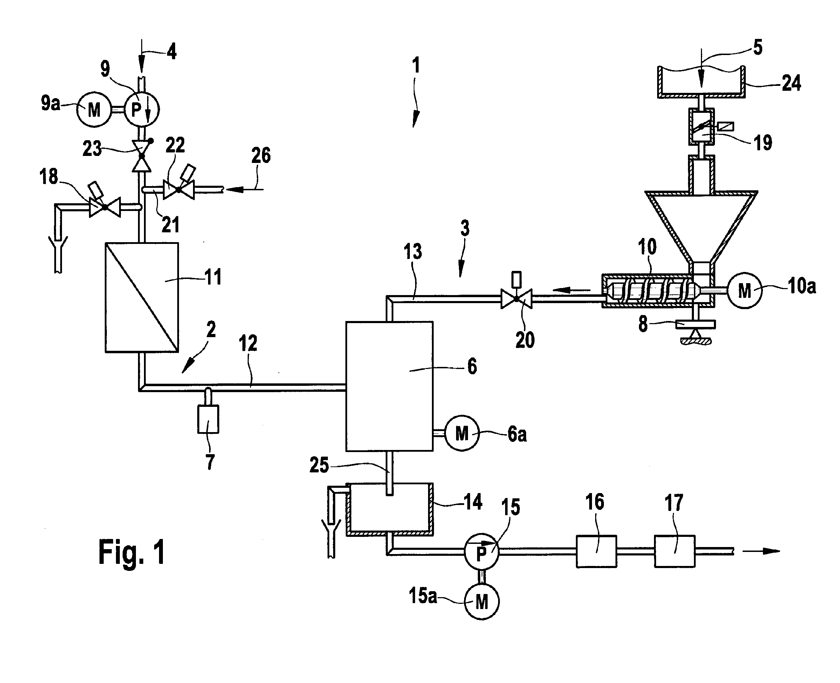

Nachfolgend wird unter Bezugnahme auf Figur 1 eine kontinuierlich arbeitenden Dosier- und Mischmaschine 1 gemäß einem ersten Ausführungsbeispiel der Erfindung im Detail beschrieben.

Wie aus Figur 1 ersichtlich ist, umfasst die Dosier- und Mischmaschine 1 einen ersten Zufuhrpfad 2 und einen zweiten Zufuhrpfad 3. Die beiden Zufuhrpfade 2, 3 sind dabei separat voneinander angeordnet und münden beide separat in einem Mischaggregat 6. Der erste Zufuhrpfad 2 ist zum Zuführen eines flüssigen Bestandteils 4 einer Ausgangslösung für Süßigkeiten, z.B. Bonbons, vorgesehen. Der zweite Zufuhrpfad 3 ist für einen pulverförmige Bestandteil 5 vorgesehen. Die erfindungsgemäße Dosier- und Mischmaschine 1 ist dabei derart ausgelegt, dass der flüssige Bestandteil 4 und der pulverformige Bestandteil 5 kontinuierlich zum Mischaggregat 6 zugeführt wird und dort vermischt wird.

Um eine genaue Mischung der beiden Bestandteile zu erreichen, ist im ersten Zufuhrpfad 2 eine erste Mengenerfassungseinrichtung 7, welche als Massedurchflussmesser ausgebildet ist, angeordnet. Ferner ist im ersten Zufuhrpfad 2 eine erste Fördereinrichtung 9 in Form einer Pumpe angeordnet, welche über einen Antrieb 9a kontinuierlich den flüssigen Bestandteil 4 im ersten Zufuhrpfad 2 fördert. Der ersten Fördereinrichtung 9 ist ein Sperrventil 23 nachgeordnet. Ferner ist im ersten Zufuhrpfad 2 ein Wärmetauscher 11 vorgesehen, welcher vorzugsweise mit Dampf beheizt wird und den flüssigen Bestandteil 4 auf eine Temperatur von 60 bis 110°C vorwärmt.

Im zweiten Zufuhrpfad 3 für den pulverigen Bestandteil 5, welcher beispielsweise Zucker ist, ist eine zweite Fördereinrichtung 10 in Form eines Schneckenförderers angeordnet. Der Schneckenförderer wird mittels eines Antriebs 10a angetrieben. Ferner ist im zweiten Zufuhrpfad 3 eine zweite Mengenerfassungseinrichtung 8 in Form einer Waage vorgesehen. Die zweite Mengenerfassungseinrichtung 8 ist dabei unterhalb des Schneckenförderers angeordnet, wobei zur Mengenregelung der Schneckenförderer kontinuierlich gewogen wird. Der pulverförmige Bestandteil 5 kann alternativ auch mittels eines Schwingförderers gefördert werden. Ein Nachfüllen der zweiten Fördereinrichtung 10 kann dabei aus einem Silo 24 über ein Sperrventil 19 erfolgen.

Wie aus Figur 1 ersichtlich ist, münden somit eine Leitung 12 des ersten Zufuhrpfads 2 und eine Leitung 13 des zweiten Zufuhrpfads 3 separat im Mischaggregat 6 und werden dort zusammengeführt. Das Mischaggregat 6 vermischt den flüssigen Bestandteil 4 und den pulverformigen Bestandteil 5 kontinuierlich, wobei das Mischaggregat 6 einen Antrieb 6a für ein Rührelement o.Ä. umfasst. Die derart vermischte Vorlösung wird über eine Leitung 25 in einen offenen Einlaufbereich 14 zugeführt. Das Mischaggregat 6 hat dabei die flüssigen und pulverigen Komponenten homogen miteinander vermischt, so dass die Mischung frei in eine zweite Pumpe 15, welche mittels eines Antriebs 15a betrieben wird, fließen kann. Der zweiten Pumpe 15 ist ein Löseaggregat 16, welches einen dampfbeheizten Mischwärmetauscher und ein Gegendruckventil umfasst, und ein Kocher 17 zum Auskochen des vorhandenen Wassers aus der gemischten Lösung nachgeschaltet.

Ferner umfasst die Dosier- und Mischmaschine 1 einen Spülwasseranschluss 21, über welchen Spülwasser 26 zur Reinigung der Maschine zugeführt werden kann. Am Spülwasseranschluss 21 ist ein Sperrventil 22 zum Freigeben und Verschließen des Spülwasseranschlusses vorgesehen. Bei geöffnetem Sperrventil 22 kann das Spülwasser 26 in den ersten Zufuhrpfad 2 und das Mischaggregat 6 strömen und die Maschine reinigen. Um zu verhindern, dass das Spülwasser 26 in die zweite Fördereinrichtung 10 gelangt, wird ein weiteres Sperrventil 20 in der Leitung 13 verschlossen. Vor dem Spülvorgang kann sich der noch im ersten Zufuhrpfad 2 befindliche flüssige Bestandteil 4 über ein Drainageventil 18 abgelassen werden. Ebenso kann das verwendete Spülwasser 26 nach der Reinigung über das Drainageventil 18 abgelassen werden.

Somit kann erfindungsgemäß eine Dosier- und Mischmaschine 1 bereitgestellt werden, welche es ermöglicht, dass eine homogene Mischung aus einem ersten flüssigen Bestandteil 4 und einem zweiten pulverförmigen Bestandteil 5 erreicht wird, ohne dass zusätzlich Wasser hinzugegeben werden muss. Dies bedeutet, dass die erfindungsgemäße Dosier- und Mischmaschine ohne große Vorlaufzeit gestartet werden kann und dabei von Beginn an eine sehr homogene Mischung aus den flüssigen und pulverförmigen Bestandteilen erreicht. Erfindungsgemäß kann dabei ein Wasseranteil der Mischung unter 8% sein. Der flüssige Bestandteil 4 ist dabei vorzugsweise ein Bestandteil mit relativ hoher Viskosität, welche jedoch kontinuierlich ohne weitere Zugabe von Wasser in das Mischaggregat 6 gefördert werden kann. Somit ist die erfindungsgemäße Dosier- und Mischmaschine 1 zur Bereitstellung einer Mischung mit hohen Feststoffanteilen geeignet, so dass im Prozessverlauf insbesondere im Kocher 7, weniger Energie zum Austreiben des Wassers zugeführt werden muss. Durch die kontinuierliche Arbeitsweise der Maschine kann ferner auf einen Zwischenspeicher o.Ä. verzichtet werden. Da erfindungsgemäß ferner während der kontinuierlichen Förderung der beiden Bestandteile der Ausgangslösung jeweils deren Menge erfasst wird, kann auch eine Genauigkeit einer Rezeptur garantiert bzw. protokolliert werden.

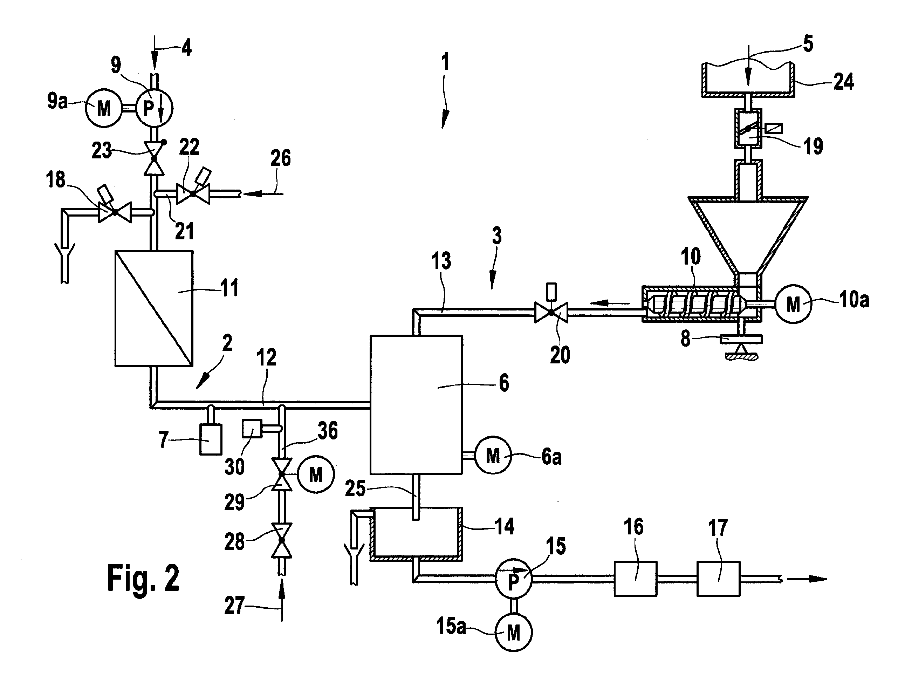

Nachfolgend wird unter Bezugnahme auf Figur 2 eine Dosier- und Mischmaschine 1 gemäß einem zweiten Ausführungsbeispiel der Erfindung im Detail beschrieben. Gleiche bzw. funktional gleiche Teile sind mit den gleichen Bezugszeichen wie im ersten Ausführungsbeispiel bezeichnet.

Wie aus Figur 2 ersichtlich ist, entspricht die Maschine des zweiten Ausführungsbeispiels im Wesentlichen der des ersten Ausführungsbeispiels, wobei zusätzlich noch ein Wasserzufuhrpfad 36 zur Zuführung von Wasser 27 vorgesehen ist. Der Wasserzufuhrpfad 36 kann mittels eines Sperrventils 28 freigegeben bzw. verschlossen werden. Dadurch kann bei Bedarf eine Dosierung einer beliebigen Menge von Wasser über ein Motorregelventil 29 ermöglicht werden. Ferner ist im Wasserzufuhrpfad 36 ein Durchflussmesser 30 vorgesehen, um eine zugeführte Menge von Wasser zu erfassen. Dadurch kann die Dosier- und Mischmaschine des zweiten Ausführungsbeispiels eine höhere Variabilität aufweisen und bei Bedarf auch Wasser zuführen.

Ansonsten entspricht dieses Ausführungsbeispiel dem vorhergehenden Ausführungsbeispiel, so dass auf die dort gegebene Beschreibung verwiesen werden kann.

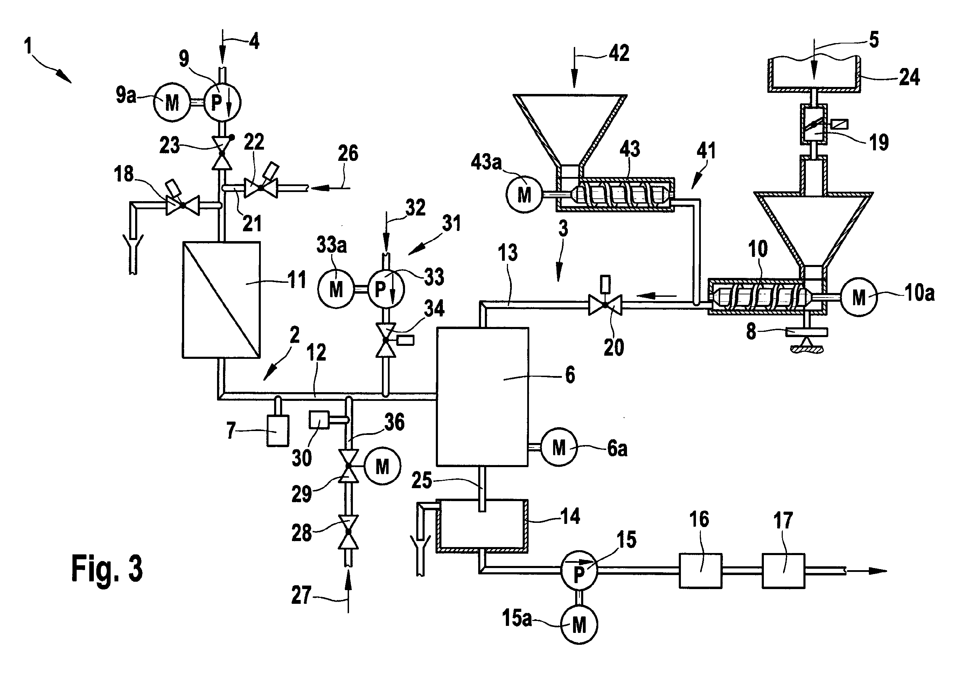

Figur 3 zeigt eine Dosier- und Mischmaschine 1 gemäß einem dritten Ausführungsbeispiel der Erfindung, wobei gleiche bzw. funktional gleiche Teile mit den gleichen Bezugszeichen wie in den vorhergehenden Ausführungsbeispiele bezeichnet sind.

Das dritte Ausführungsbeispiel entspricht im Wesentlichen dem zweiten Ausführungsbeispiel, wobei zusätzlich noch beim dritten Ausführungsbeispiel ein dritter Zufuhrpfad 31 für einen weiteren flüssigen Bestandteil 32 vorgesehen ist. Im dritten Zuführpfad 31 ist eine Pumpe 33, welche mittels eines Antriebs 33a angetrieben wird, angeordnet, um den dritten Bestandteil 32 zu fördern. Ferner ist im dritten Zuführpfad 31 ein weiteres Absperrventil 34 angeordnet. Um eine Menge des zugeführten dritten Bestandteils zu bestimmen, kann ferner noch ein Durchflussmesser (nicht dargestellt) vorgesehen werden.

Ferner umfasst das dritte Ausführungsbeispiel einen vierten Zufuhrpfad 41, zum Zuführen eines vierten Bestandteils 42, welcher ebenfalls ein pulverförmiger Bestandteil ist. Eine Zuführung des vierten pulverförmigen Bestandteils erfolgt über einen Schneckenförderer 43, der über einen Antrieb 43a angetrieben wird.

Wie aus Figur 3 ersichtlich ist, mündet der dritte Zufuhrpfad 31 dabei in die Leitung 12 des ersten Zufuhrpfads 2 und wird dann gemeinsam mit dem ersten flüssigen Bestandteil 4 zum Mischaggregat 6 zugeführt. Der vierte Zufuhrpfad 41 mündet in den zweiten Zufuhrpfad 3 und wird dann gemeinsam mit dem pulverförmigen ersten Bestandteil 5 zum Mischaggregat 6 zugeführt. Somit werden beim dritten Ausführungsbeispiel vier Bestandteile, nämlich zwei flüssige Bestandteile 4, 32 und zwei pulverförmige Bestandteile 5, 42 zum Mischaggregat 6 zugeführt und dort zu einer homogenen Ausgangslösung vermischt.

Ansonsten entspricht dieses Ausführungsbeispiel den vorhergehenden Ausführungsbeispielen, so dass auf die dort gegebene Beschreibung verwiesen werden kann.

## Patentansprüche

1. Kontinuierlich arbeitende Dosier- und Mischmaschine zur Herstellung einer Ausgangslösung für Süßigkeiten, insbesondere Bonbons, umfassend
- einen ersten Zufuhrpfad (2) zum Zuführen eines ersten flüssigen Bestandteils (4) für die Süßigkeit,
- einen zweiten Zufuhrpfad (3) zum Zuführen eines zweiten, pulverförmigen Bestandteils (5) für die Süßigkeit,
- ein Mischaggregat (6), wobei der erste Zufuhrpfad (2) und der zweite Zufuhrpfad (3) jeweils in das Mischaggregat (6) münden und das Mischaggregat (6) den flüssigen Bestandteil (4) und den pulverförmigen Bestandteil (5) homogen vermischt, um die Ausgangslösung zu erhalten,
- eine erste Mengenerfassungseinrichtung, welche im ersten Zufuhrpfad (2) angeordnet ist, um kontinuierlich eine zugeführten Menge des ersten Bestandteils (4) zu erfassen,
- eine zweite Mengenerfassungseinrichtung (8), welche im zweiten Zufuhrpfad (3) angeordnet ist, um kontinuierlich eine zugeführt Menge des zweiten Bestandteils (5) zu erfassen,
- eine erste Fördereinrichtung (9), welche im ersten Zufuhrpfad (2) angeordnet ist, um den ersten Bestandteil (4) kontinuierlich zu fördern, und
- eine zweite Fördereinrichtung (10), welche im zweiten Zufuhrpfad (3) angeordnet ist, um den zweiten Bestandteil (5) kontinuierlich zu fördern, ferner umfassend einen Wärmetauscher (11), welcher im ersten Zufuhrpfad (2) angeordnet ist, um den ersten Bestandteil (4) im ersten Zufuhrpfad (2) zu erwärmen.

2. Maschine nach Anspruch 1, ferner umfassend einen dritten Zufuhrpfad (26, 31, 41), welcher in der Lage ist, Wasser oder weitere Bestandteile für die Ausgangslösung zuzuführen, wobei der dritte Zufuhrpfad direkt in das Mischaggregat (6) mündet oder der dritte Zufuhrpfad in den ersten und/oder zweiten Zufuhrpfad mündet.

3. Maschine nach einem der vorhergehenden Ansprüche, ferner umfassend einen Spülwasseranschluss (21), welcher im ersten Zufuhrpfad (2) angeordnet ist, um Spülwasser zum Reinigen des ersten Zufuhrpfads (2) und des Mischaggregats (6) zuzuführen.

4. Maschine nach einem der vorhergehenden Ansprüche, **dadurch gekennzeichnet, dass** die zweite Fördereinrichtung (10) ein Schneckenförderer oder ein Vibrationsförderer ist.

5. Maschine nach einem der vorhergehenden Ansprüche, **dadurch gekennzeichnet, dass** die zweite Mengenerfassungseinrichtung (8) eine Waage ist.

6. Maschine nach einem der vorhergehenden Ansprüche, umfassend einen dritten Zufuhrpfad für einen weiteren flüssigen Bestandteil (32) und einen vierten Zufuhrpfad (41) für einen weiteren pulverförmigen Bestandteil (42).

7. Maschine nach einem der vorhergehenden Ansprüche, **dadurch gekennzeichnet, dass** dem Mischaggregat (6) ein Löseaggregat (16) und/oder ein Kocher (17) nachgeordnet sind.

8. Verfahren zur Herstellung einer Ausgangslösung für Süßigkeiten, umfassend die Schritte:
- kontinuierliches Zuführen eines ersten flüssigen Bestandteils (4) zu einem Mischaggregat (6) über einen ersten Zufuhrpfad (2),
- Erwärmen des ersten flüssigen Bestandteils (4) über einen im ersten Zuführpfad (2) angeordneten Wärmetauschers (11),
- kontinuierliches Zuführen eines zweiten pulverförmigen Bestandteils (5) zu dem Mischaggregat (6) über einen zweiten Zufuhrpfad (3),
- Mischen der kontinuierlich zugeführten ersten und zweiten Bestandteile (4, 5) im Mischaggregat (6), um eine homogene Ausgangslösung bereitzustellen,
- wobei eine Menge des kontinuierlich zugeführten ersten Bestandteils (4) während des Zuführvorgangs ständig erfasst wird, und
- wobei eine Menge des kontinuierlich zugeführten zweiten Bestandteils (5) während des Zuführvorgangs kontinuierlich erfasst wird.

9. Verfahren nach Anspruch 8, **dadurch gekennzeichnet, dass** zusätzlich noch eine vorbestimmte Menge an Wasser und/oder ein weiterer flüssiger Bestandteil (32) in den ersten Zufuhrpfad (2) und/oder direkt in das Mischaggregat (6) kontinuierlich zugeführt wird.

10. Verfahren nach Anspruch 8 oder 9, **dadurch gekennzeichnet, dass** zusätzlich ein weiterer pulverförmiger Bestandteil (42) in den zweiten Zufuhrpfad (3) und/oder direkt in das Mischaggregat (6) zugeführt wird.

11. Verfahren nach einem der Ansprüche 8 bis 10, **dadurch gekennzeichnet, dass** der erste flüssige Bestandteil (4) einen Wasseranteil von unter 20%, vorzugsweise unter 15%, und besonders bevorzugt unter 10% aufweist.

## Claims

1. Continuously operating metering and mixing machine for producing a starting solution for confectionery, in particular for sweets, comprising
- a first, feed path (2) for feeding a first, liquid constituent part (4) for the confectionery item,
- a second feed path (3) for feeding a second, pulverulent constituent part (5) for the confectionery item,
- a mixing subassembly (6), wherein the first feed path (2) and the second feed path (3) each open out into the mixing subassembly (6) and the mixing subassembly (6) homogeneously mixes the liquid constituent part (4) and the pulverulent constituent part (5) in order to obtain the starting solution,
- a first quantity-recording device, which is arranged in the first feed path (2) in order to record a fed quantity of the first constituent part (4) continuously,
- a second quantity-recording device (8), which is arranged in the second feed path (3) in order to record a fed quantity of the second constituent part (5) continuously,
- a first conveying device (9), which is arranged in the first feed path (2) in order to convey the first constituent part (4) continuously, and
- a second conveying device (10), which is arranged in the second feed path (3) in order to convey the second constituent part (5) continuously, and also
- a heat exchanger (11), which is arranged in the first feed path (2) in order to heat the first constituent part (4) in the first feed path (2).

2. Machine according to Claim 1, also comprising a third feed path (26, 31, 41), which is capable of feeding water or further constituent parts for the starting solution, wherein the third feed path opens out directly into the mixing subassembly (6) or the third feed path opens out into the first and/or second feed path.

3. Machine according to one of the preceding claims, also comprising a wash-water connection (21), which is arranged in the first feed path (2) in order to feed wash water for cleaning the first feed path (2) and the mixing subassembly (6).

4. Machine according to one of the preceding claims, **characterized in that** the second conveying device (10) is a screw conveyor or a vibration conveyor.

5. Machine according to one of the preceding claims, **characterized in that** the second quantity-recording device (8) is a set of weighing scales.

6. Machine according to one of the preceding claims, comprising a third feed path for a further liquid constituent part (32) and a fourth feed path (41) for a further pulverulent constituent part (42).

7. Machine according to one of the preceding claims, **characterized in that** a dissolving subassembly (16) and/or a boiler (17) are/is arranged downstream of the mixing subassembly (6).

8. Method of producing a starting solution for confectionery, comprising the following steps:
- a first, liquid constituent part (4) is fed continuously to a mixing subassembly (6) via a first feed path (2),
- the first, liquid constituent part (4) is heated via a heat exchanger (11) arranged in the first feed path (2),
- a second, pulverulent constituent part (5) is fed continuously to the mixing subassembly (6) via a second feed path (3),
- the continuously fed first and second constituent parts (4, 5) are mixed in the mixing subassembly (6) in order to provide a homogeneous starting solution,
- wherein a quantity of the continuously fed first constituent part (4) is recorded throughout the feed operation, and
- wherein a quantity of the continuously fed second constituent part (5) is recorded continuously during the feed operation.

9. Method according to Claim 8, **characterized in that**, in addition, there is also a predetermined quantity of water and/or a further liquid constituent part (32) fed continuously into the first feed path (2) and/or directly into the mixing subassembly (6).

10. Method according to Claim 8 or 9, **characterized in that**, in addition, a further pulverulent constituent part (42) is fed into the second feed path (3) and/or directly into the mixing subassembly (6).

11. Method according to one of Claims 8 to 10, **characterized in that** the first, liquid constituent part (4) has a proportion of water of less than 20%, preferably less than 15%, and particularly preferably less than 10%.

## Revendications

1. Machine de dosage et de mélange à fonctionnement continu pour la production d'une solution initiale pour des sucreries, en particulier des bonbons, comprenant:
- un premier chemin d'alimentation (2) pour fournir un premier ingrédient liquide (4) pour la sucrerie,
- un deuxième chemin d'alimentation (3) pour fournir un deuxième ingrédient en poudre (5) pour la sucrerie,
- une unité de mélange (6), le premier chemin d'alimentation (2) et le deuxième chemin d'alimentation (3) débouchant respectivement dans l'unité de mélange (6) et l'unité de mélange (6) mélangeant de façon homogène l'ingrédient liquide (4) et l'ingrédient en poudre (5), afin d'obtenir la solution initiale,
- un premier dispositif de détection de quantité, qui est disposé dans le premier chemin d'alimentation (2), afin de détecter en continu une quantité fournie du premier ingrédient (4),
- un deuxième dispositif de détection de quantité (8), qui est disposé dans le deuxième chemin d'alimentation (3), afin de détecter en continu une quantité fournie du deuxième ingrédient (5),
- un premier dispositif de transport (9), qui est disposé dans le premier chemin d'alimentation (2), afin de transporter en continu le premier ingrédient (4), et
- un deuxième dispositif de transport (10), qui est disposé dans le deuxième chemin d'alimentation (3), afin de transporter en continu le deuxième ingrédient (5),
comprenant en outre
- un échangeur de chaleur (11), qui est disposé dans le premier chemin d'alimentation (2), afin de chauffer le premier ingrédient (4) dans le premier chemin d'alimentation (2).

2. Machine selon la revendication 1, comprenant en outre un troisième chemin d'alimentation (26, 31, 41), qui est en mesure d'ajouter de l'eau ou d'autres ingrédients pour la solution initiale, le troisième chemin d'alimentation débouchant directement dans l'unité de mélange (6) ou le troisième chemin d'alimentation débouchant dans le premier et/ou le deuxième chemin d'alimentation.

3. Machine selon l'une quelconque des revendications précédentes, comprenant en outre un raccord d'eau de rinçage (21), qui est disposé dans le premier chemin d'alimentation (2), afin d'ajouter de l'eau de rinçage pour le nettoyage du premier chemin d'alimentation (2) et de l'unité de mélange (6).

4. Machine selon l'une quelconque des revendications précédentes, **caractérisée en ce que** le deuxième dispositif de transport (10) est un transporteur à vis ou un transporteur à vibrations.

5. Machine selon l'une quelconque des revendications précédentes, **caractérisée en ce que** le deuxième dispositif de détection de quantité (8) est une balance.

6. Machine selon l'une quelconque des revendications précédentes, comprenant un troisième chemin d'alimentation pour un autre ingrédient liquide (32) et un quatrième chemin d'alimentation (41) pour un autre ingrédient en poudre (42).

7. Machine selon l'une quelconque des revendications précédentes, **caractérisée en ce qu'**une unité de dissolution (16) et/ou un cuiseur (17) est/sont disposé(s) en aval de l'unité de mélange (6).

8. Procédé de production d'une solution initiale pour des sucreries, comprenant les étapes suivantes:
- alimentation continue d'un premier ingrédient liquide (4) à une unité de mélange (6) via un premier chemin d'alimentation (2),
- chauffage du premier ingrédient liquide (4) au moyen d'un échangeur de chaleur (11) disposé dans le premier chemin d'alimentation (2),
- alimentation continue d'un deuxième ingrédient en poudre (5) à l'unité de mélange (6) via un deuxième chemin d'alimentation (3),
- mélange du premier et du deuxième ingrédients (4, 5) fournis en continu dans l'unité de mélange (6), afin de préparer une solution initiale homogène,
- dans lequel on détecte en continu une quantité du premier ingrédient fourni en continu (4) pendant l'opération d'alimentation, et
- dans lequel on détecte en continu une quantité du deuxième ingrédient fourni en continu (5) pendant l'opération d'alimentation.

9. Procédé selon la revendication 8, **caractérisé en ce que** l'on fournit encore en plus en continu une quantité prédéterminée d'eau et/ou un autre ingrédient liquide (32) dans le premier chemin d'alimentation (2) et/ou directement dans l'unité de mélange (6).

10. Procédé selon la revendication 8 ou 9, **caractérisé en ce que** l'on fournit en plus un autre ingrédient en poudre (42) dans le deuxième chemin d'alimentation (3) et/ou directement dans l'unité de mélange (6).

11. Procédé selon l'une quelconque des revendications 8 à 10, **caractérisé en ce que** le premier ingrédient liquide (4) présente une teneur en eau inférieure à 20 %, de préférence inférieure à 15 %, et de préférence encore inférieure à 10 %.
